# EUROPEAN PATENT APPLICATION

(11) **EP 4 803 988 A2**
(43) Date of publication of application: **09.09.2026**
(21) Application number: 26162024.9
(22) Date of filing: 03.03.2026
(51) Int. Cl.: G06F 3/048, G06F 3/01, G06F 9/451

(54) **A METHOD FOR FRAMEWORK-INDEPENDENT USER INPUT PROCESSING IN HUMAN-MACHINE INTERFACES**

(30) Priority: 05.03.2025 FI 20255188
(71) Applicant: Seafarix Oy, 33210 Tampere (FI)
(72) Inventor: Saukko, Marko, 33950 Pirkkala (FI); Leppänen, Tomi, 33900 Tampere (FI); Hämäläinen, Enni, 33470 Ylöjärvi (FI)
(74) Representative: Moosedog Oy

(57) **Abstract**

A method for framework-independent user input processing in humanmachine interfaces (HMI). The method enables a unified way to interact with different UI frameworks without requiring modifications to the underlying applications, frameworks or operating systems. The system receives user input, such as voice, gestures, or text, processes it into a machine-understandable command, and dynamically maps it to actionable UI elements. Identified UI elements are retrieved from an interaction database and highlighted for user confirmation before executing simulated input events injected via a virtual input device of the operating system at pixel coordinates of a selected actionable region. The system can further learn from user interactions, refining UI mappings over time. By operating at the graphical buffer level, rather than requiring direct access to UI source code, the method supports a wide range of applications, including binary-only software. This approach enhances input adaptability, accuracy, and accessibility across multiple UI frameworks.

## Description

### TECHNICAL FIELD

The present disclosure relates generally to human-machine interface (HMI) technologies; and more specifically, to a method and system for unified input processing across different user interface frameworks.

### BACKGROUND

The current user interfaces (UI) across different frameworks are fragmented, requiring each system to be manually adapted to different input sources such as touch, keyboard, mouse, and voice. Traditional systems consist of multiple different subsystems, each operating on its own software framework, necessitating that every framework be individually adapted to process input from the controlling entity. Each UI framework operates with its own rules, requiring developers to implement specific integrations for new input methods. This results in high maintenance costs, slow adaptation to new technologies, and an increased burden on developers. Additionally, companies often rely on third-party application engines that may not natively support alternative input methods, further complicating the process.

A significant challenge arises in environments with multiple human-machine interfaces (HMIs), such as automotive systems, industrial control systems, and consumer electronics. These systems rely on different software frameworks, and integrating an alternative input method, such as voice control, requires modifying each framework individually. This dependency on framework providers and software updates makes adaptation complicated and expensive. Moreover, in cases like automotive manufacturing, where supply chain shortages have led to the removal of certain input features (e.g., temporary removal of touchscreens), there is an urgent need for flexible, non-framework-dependent input solutions.

Traditional solutions suffer from the inability to reliably reproduce user interactions. Even when a user attempts to perform the same action multiple times, variations in UI state, such as screen layout changes, notifications, and dynamic overlays, can lead to failures. Conventional automation methods, like record-and-playback scripts, do not adapt well to these dynamic environments, making them unreliable for UI testing and interaction automation.

Existing AI-based recognition systems focus primarily on detecting physical objects (e.g., people, animals, traffic signs), with limited application to UI interaction. Some existing solutions may take static snapshots of UI layouts and manually map them to touch interactions, but these methods are labor-intensive, prone to errors, and lack adaptability. Voice recognition systems require separate integration into each framework, further increasing development effort and reducing scalability.

The main reason for these issues is that current UI integration methods do not provide a unified, adaptable mechanism for processing input. Every new input type, such as voice, gesture, or adaptive accessibility tools, must be separately integrated into each framework, leading to redundant work. Furthermore, automation tools fail in dynamic UI environments, as they are not designed to handle frequent and unpredictable layout changes. Current AI solutions in this space are largely limited to static image recognition rather than real-time UI interaction.

Therefore, in light of the foregoing discussion, there exists a need to overcome the aforementioned drawbacks associated with the lack of a unified and adaptable input mechanism across different user interface frameworks, the high maintenance costs and complexity of integrating new input methods, and the limitations of existing automation tools in handling dynamic UI environments.

### SUMMARY

The aim of the present disclosure is to provide a method to enable unified way for input on different user interface frameworks. The aim of the disclosure is achieved by a framework-independent input processing methods as defined in the appended independent claims to which reference is made to. Advantageous features are set out in the appended dependent claims.

The methods according to the present disclosure provide a single point of adaptation for all entities, making the system more maintainable, faster to adapt, and more technically efficient. Eliminating the need for direct modifications to operating systems, frameworks or applications ensures compatibility across diverse platforms without requiring framework-specific adjustments. This architecture enhances scalability, reduces integration complexity, and improves system robustness by dynamically adapting to UI changes in real-time. Additionally, the approach ensures consistent and reliable user interactions, even in environments with frequently changing UI layouts or multiple HMI frameworks, thereby improving automation accuracy and reducing development overhead.

The proposed methods overcome the challenges known in the art by introducing an AI-driven, framework-independent method for input processing. It analyzes UI elements dynamically, identifies actionable UI input areas that can be interacted with, and maps user commands, regardless of input method, to the appropriate UI elements. This eliminates the need for framework-specific adaptations, making input integration faster, more cost-effective, and maintainable. Additionally, the present methods continuously learn from user interactions, refining its mapping process to improve accuracy over time. By applying real-time UI analysis and adaptive learning, the system ensures that input methods remain consistent and functional, even as UI elements evolve.

The present disclosure provides a unified input system that works across all UI frameworks, reducing development effort, improving adaptability, and enabling new input methods such as voice control without requiring individual framework modifications. This results in a more scalable, flexible, and cost-efficient solution for human-machine interaction across diverse applications.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Fig. 1 is a block diagram illustrating a method for processing user interface interaction on a human-machine interface (HMI), including UI element analysis, interaction mapping, and input adaptation;
Fig. 2 is a system architecture diagram illustrating a framework-independent input processing system, where an adaptation layer enables seamless interaction across multiple UI frameworks without requiring modifications to individual frameworks;
Fig. 3 is a block diagram illustrating a hands-free input method for HMI, where user input is processed, mapped to UI elements, and executed as simulated input events within an HMI framework.

### DETAILED DESCRIPTION OF EMBODIMENTS

The following detailed description illustrates embodiments of the present disclosure and ways in which they can be implemented. The present disclosure provides methods for framework-independent user input processing in human-machine interfaces (HMI). The embodiments according to the present disclosure significantly improve the adaptability, accuracy, and efficiency of user input processing across different UI frameworks by enabling a unified, framework-independent interaction method without requiring modifications to the underlying applications or operating systems.

In the context of the present disclosure, a "UI element source" refers to any data source from which candidate actionable user interface elements can be identified. Such UI element sources may include, for example, a graphics buffer containing rendered pixel data of the HMI, an interaction database storing previously detected UI elements and associated metadata, or a combination thereof. The expression "at least one UI element source" encompasses embodiments in which candidate actionable UI elements are identified from the graphics buffer alone, from the interaction database alone, or by combining information obtained from both the graphics buffer and the interaction database.

In an aspect, the present disclosure provides a method for processing user interface interaction on the human-machine interface of a device, the method comprises performing a User Interface (UI) element analysis of an application output on the human-machine interface (HMI); identifying, based on the performed UI element analysis, actionable UI areas; adding identified actionable UI areas with metadata to an interaction database for matching with user commands; configuring an engine to map user commands, provided via an input method different from an originally intended input method, to the actionable UI areas using the interaction database.

The method enables to provide a unified way for input across different user interface (UI) frameworks through a framework-independent approach that dynamically analyzes UI elements, identifies actionable areas, and maps user commands from alternative input methods to those UI elements. Unlike conventional solutions that require modifying UI framework code or integrating with application source code, this method operates at the graphical buffer level, allowing seamless adaptation to various UI frameworks without direct access to or modification of the underlying UI source code. This enables increased adaptability to different UI frameworks, reduce development and maintenance efforts, and improving the ability to support alternative input methods without requiring modifications to existing applications or operating systems.

In a preferred embodiment, the graphical level works on graphics buffers, i.e., the UI element analysis is performed directly on a graphics buffer, for example framebuffer (i.e. the composition of all buffers displayed on the screen) or window buffer, comprising the rendered pixel output of the display, without requiring accessibility trees, UI element hierarchies, view trees, or framework-provided UI metadata. The method is thereby operable in closed or proprietary HMI environments and with binary-only applications, because it does not rely on application integration interfaces.

Performing a UI element analysis of an application output on the human-machine interface (HMI) can be executed by using image processing techniques such as optical character recognition (OCR), pattern recognition, image metadata analysis, color analysis, and change detection between frames. The analysis is performed directly on the graphical output (e.g., graphics buffers) without requiring access to the UI source code, ensuring compatibility with existing applications.

In some embodiments, the UI element analysis includes a trained machine-vision model, such as a convolutional neural network (CNN), that detects candidate UI areas and outputs coordinates (e.g., bounding areas) and an actionability indication (e.g., a confidence or probability) for each candidate region. OCR and/or image recognition (including icon recognition) may be applied to associate candidate regions with textual labels or icon classes to support subsequent matching.

Such a machine-vision model could be trained by taking screenshots of the target system while it is being used. This does not need to be real use case but for the best results it should mimic one. These screenshots are then labeled by people to mark the candidate UI areas. This data can be used for training an object detector which can be a CNN but also some other type of neural network or more classical machine learning object detection method. Examples of object detection neural networks include convolutional neural networks, transformer models and also Segment Anything Models (SAMs) that combine advanced language capabilities with vision capabilities.

The training can use low amount of screenshot data, if there is a model that has been previously taught to detect objects for another task. This is called transfer learning where weights of an existing object detection model are reused for a different task. Typically CNN models have backbone, neck and head parts. The weights of the backbone and neck can generalize to other tasks and may be reused for a different object detection task. The new model may use one or more parts of the weights. The new model may be also trained to adjust the reused weights while learning the new task. Reuse of the weights reduces the need for a lot of training data for the new task. Reuse of the weights also reduces the needed training time for the new task.

Identifying actionable UI areas based on the performed UI element analysis can be carried out by recognizing elements in the UI that correspond to interactive components, such as buttons, links, or input fields. This is achieved through e.g., pattern recognition, object detection, and shape analysis without requiring modifications to the UI code and by using machine vision models, UI element detection, and trained AI models arranged to distinguish interactive components from static ones. The graphical buffer data is analyzed to determine which elements are likely to be interactive.

In some embodiments, the step of identifying actionable UI areas may, for improving the efficiency of interaction mapping, optionally comprise analyzing user interaction patterns to prioritize certain UI elements. For example, the system may observe areas of the screen that the user frequently touches and use this information to determine potential interactive elements. This enhances the accuracy of UI element identification by recognizing frequently used regions as high-probability actionable areas, even if they are not explicitly labeled as buttons or controls within the UI framework. Such an approach does not exclude other UI analysis techniques, such as pattern recognition, OCR, or metadata extraction but may complement them by incorporating user behavior insights. Additionally, this may be further refined or extended in other implementations, such as by integrating historical touch pattern data into the interaction database for adaptive learning.

Once actionable UI areas are identified, the step of adding identified actionable UI areas with metadata to an interaction database for matching with user commands enables to extract and store the metadata such as text labels, object shapes, types, and colors in an interaction database. This metadata allows future user commands to be mapped efficiently to the corresponding UI elements. The interaction database serves as a reference that enables consistent and repeatable UI interactions, even in dynamically changing UIs.

In addition to the foregoing metadata, the interaction database may store the coordinates of the actionable UI areas and optionally relative spatial relations between detected actionable UI areas, such as whether one actionable area is positioned left of, right of, above, or below another actionable area. Such stored relations may give the elements context for matching UI commands and may assist in robust matching under layout variations and dynamic UI changes.

Configuring an engine to map user commands, provided via an input method different from the originally intended input method, to the actionable UI areas using the interaction database enables to translate alternative input methods (e.g., voice commands, gestures) into actionable interactions within the UI. E.g., if the original input method was touch, a voice command can be mapped to the corresponding UI button detected in the previous steps. The engine processes incoming commands, retrieves matching UI elements from the database, and generates simulated input events accordingly.

In a preferred implementation, the engine receives (i) a machine-understandable representation of the user command (e.g., text output of speech-to-text), and (ii) candidate actionable UI areas obtained from the graphics buffer analysis, and the engine outputs a selected actionable UI area and an associated action type. Candidate areas may be ranked using information such as extracted text, recognized icon classes, previously recorded corrections, and/or stored metadata.

In one implementation, the engine performs natural language processing on the machine-understandable command to extract (i) an action type (for example, select, press, scroll, swipe, or cancel) and (ii) a target element reference (for example, a textual label or an icon class such as "back" or "audio settings"). The engine then ranks the candidate actionable UI areas detected from the framebuffer using the extracted text/icon class and previously recorded corrections in the interaction database. If the ranking does not yield a sufficiently distinctive top candidate, the engine requests user confirmation by temporarily highlighting two or more high-scoring actionable regions on an overlay rendered on top of the framebuffer, and executes the interaction only after receiving the user's confirmation.

By implementing these steps, the method ensures a flexible, framework-independent input system that allows alternative input methods to be used across different UI frameworks without requiring modifications to applications or operating systems. This results in greater adaptability, reduced integration complexity, and improved accessibility for diverse user interaction scenarios.

Optionally, adding identified actionable UI areas with metadata to the interaction database for matching with user commands can be later matched to the commands sent by the user to the engine.

The alternative input refers to providing the input in the alternative way from what was original input method. E.g., if originally the input method was a touch input, then the alternative input method may be voice input. Or if previously there was mouse cursor needed then the alternative input method may be touch input.

As an example of the present method, a voice input is received as raw voice data and processed by a speech-to-text (STT) engine. The STT engine is configured to convert the voice input into text, which is subsequently forwarded to a search AI logic module. Simultaneously, the graphical output of the user interface is captured from the graphics buffer and analyzed using a convolutional neural network (CNN). The CNN is configured to process the raw image and extracts UI elements from the graphical buffer, identifying potential interactive components.

Alternatively this graphics buffer can be analyzed using other types of machine learning models. CNN is preferred due to its relatively low computational cost and low requirements for training data. Segment anything models require much more processing.

The extracted UI elements are provided to the search AI logic module, where the system matches the UI components with the received text command to determine the most probable actionable UI area. The search AI logic module processes this information and generates a proposed selection of the intended UI element for the user's confirmation. The proposal is then conveyed to the user through both text-to-speech (TTS) output and a visual display, ensuring that the user receives feedback regarding the system's selection.

Following the presentation of the proposed UI element, the system waits for user interaction, which may involve confirming the selection or providing an alternative command. Once the interaction is confirmed, the system generates a corresponding input event and executes the intended action on the HMI. Finally, the system provides action confirmation and feedback, ensuring that the input command has been correctly executed. The method enables seamless adaptation of alternative input methods, such as voice commands, to various UI frameworks without requiring modifications to the UI source code or application logic.

The method according to the embodiment of the present disclosure enables the adaptation of new HMI/UI frameworks without requiring individual maintenance for each framework. In an example, the operating system receives an HMI information stream through a dedicated channel, which may include framebuffer data, semantic element listings, audio signals, or text extracted from applications or the application framework running on the operating system.

Framebuffer data is a form of graphical buffer. Framebuffer is the graphical buffer that is displayed on the screen. It is typically a composition of multiple graphical buffers from different applications. It can be also a buffer that application uses directly for drawing.

The applications may utilise one or more UI frameworks. They may use distinct frameworks. The approach is agnostic to UI frameworks because it works on graphical buffer level and does not depend on APIs provided by UI frameworks. The solution can also be integrated with other graphical buffers that may or may not be visible to the user. This includes but is not limited to window surfaces that may be visible on the screen, minimized, hidden or located off-screen.

The received information stream is processed using graphics analysis, pattern recognition, optical character recognition (OCR), audio detection, or similar technologies to extract UI elements such as buttons and text along with their corresponding coordinates. These elements are identified as actionable UI components to which interactions can be mapped. The extracted UI elements, along with their associated metadata, including text, object shapes, types, and colors, are stored in an interaction database for future user input matching. This structured storage allows for dynamic adaptation to user commands, enabling interaction with UI components without requiring direct integration with or modification of the UI framework.

This method eliminates the need for framework-specific adaptations when integrating alternative input methods, such as voice commands. By processing UI interactions at the graphical and semantic level, the method ensures that the adaptation is independent of the underlying UI framework, thereby significantly reducing integration complexity.

Here the semantic level is determined from the graphical level, i.e. from the detected UI elements. The method uses graphics buffers to determine the semantic meaning of the UI elements. It does not use accessibility trees or framework-provided UI metadata. However, if semantic level is available in the framework it can be used for enhancing the system's capabilities, but that may increase the dependency to the UI framework.In an alternative embodiment, the system can be optimized by initiating pattern recognition and OCR processing on the graphics buffer only when a user voice command is received. Instead of continuously analyzing the graphical output, the system remains in a low-power or idle state and activates image processing only upon detecting an incoming voice command. This approach reduces computational overhead and improves system efficiency, particularly in resource-constrained environments.

When a voice command is detected by the voice recognition engine, it triggers the graphics buffer and CNN integration to capture the UI frame from the active HMI/UI framework. At this point, the graphics processing, pattern recognition, OCR, and audio detection module is activated to analyze the UI elements dynamically. The extracted actionable UI components, including buttons, text, and icons, are then processed and stored in the interaction database for input matching.

By implementing this, the system optimizes resource usage by reducing unnecessary computational load when no user interaction occurs. Additionally, this method enhances responsiveness, as the system dynamically adapts to user inputs while maintaining real-time accuracy in UI element detection. This embodiment ensures that the system remains efficient without compromising the ability to accurately map voice commands to corresponding UI elements.

More specifically, the present disclosure provides a method for processing user interface interaction on the human-machine interface (HMI) of a device, the method comprises: performing a User Interface (UI) element analysis of an application output in a graphics buffer comprising a rendered pixel output of the human-machine interface; identifying, based on the performed UI element analysis, candidate actionable UI areas within the graphics buffer; extracting metadata from the graphics buffer and associating the extracted metadata with the respective candidate actionable UI areas; adding the identified candidate actionable UI areas together with metadata to an interaction database for matching with user commands; and configuring an engine to map user commands, provided via an input method different from an originally intended input method, to one of the candidate actionable UI areas using the interaction database.

In this embodiment, the method is implemented such that the UI element analysis is performed directly on rendered pixel data stored in a graphics buffer that represents the application output of the HMI. The graphics buffer may comprise pixel output generated by one or more heterogeneous UI frameworks, and the analysis is carried out without relying on accessibility trees, view hierarchies, software development kits, or framework-specific UI metadata. By operating directly on rendered pixel data, the method enables uniform processing of application outputs originating from different or proprietary frameworks and allows UI elements to be detected even where no structured UI metadata is available. This provides a framework-agnostic mechanism for identifying interactive regions of the HMI.

In this embodiment, candidate actionable UI areas are identified within the graphics buffer based on the performed UI element analysis, and metadata is extracted directly from the rendered pixel content corresponding to those areas. The metadata may be obtained through image analysis techniques such as text recognition, shape detection, object classification, color analysis, or other visual feature extraction processes applied to the graphics buffer. The extracted metadata is then associated with the respective candidate actionable UI areas and stored together with their spatial information in the interaction database. The metadata may comprise, for example, text labels, recognized characters or strings, object shapes and detected visual features, control types, icon classifications, color attributes, bounding area coordinates or other spatial position data, calculated actionability scores indicating a likelihood of interactivity, timestamps indicating when the UI area was detected, and other contextual or descriptive data derived from analysis of the rendered pixel output in the graphics buffer. By associating such metadata with each candidate actionable UI area and storing it in the interaction database, the engine can subsequently map user commands, received via an input method different from the originally intended input method of the application, to a corresponding candidate actionable UI area. This embodiment enables that the user interface interactions can be processed in a framework-independent manner based solely on rendered pixel data, while enhancing command-to-element mapping through structured metadata stored in the interaction database.

Performing the UI element analysis may comprise processing the graphics buffer using a convolutional neural network object detector in combination with icon classification and optical character recognition to output bounding boxes, labels and actionability scores for the candidate actionable UI areas. The convolutional neural network may be configured to detect visual objects corresponding to potential user interface elements within the graphics buffer and to generate bounding boxes defining spatial regions of interest. Optical character recognition may be applied to pixel regions to extract textual content, and icon classification may be used to identify graphical symbols and control types represented in the rendered output. Based on the detected visual features, labels may be assigned to the candidate actionable UI areas, and an actionability score may be calculated for each detected region to indicate a likelihood that the region corresponds to an interactive UI element.

By combining convolutional object detection, icon classification, and text recognition directly on the graphics buffer, the system can robustly identify interactive elements regardless of the underlying UI framework or application structure. The generated bounding boxes, labels, and actionability scores provide structured data that can be stored as metadata in the interaction database and used by the engine to prioritize and accurately map user commands to the most relevant candidate actionable UI areas. This improves detection accuracy and confidence estimation of interactive UI elements based on rendered pixel content, improving interaction without dependency on framework-specific metadata.

Adding the identified candidate actionable UI areas with metadata to the interaction database comprises storing, for each candidate actionable UI area, one or more of a bounding box; extracted text; icon class; or user-provided text commands related to the respective candidate actionable UI area, the interaction database being framework-agnostic. The interaction database is maintained in a framework-agnostic manner, such that the stored information is derived from rendered pixel data rather than from framework-specific identifiers, object references, or accessibility metadata. By storing spatial, textual, and semantic descriptors together with associated user command mappings independently of any underlying UI framework, the system enables consistent matching of user commands to UI elements across different applications and heterogeneous rendering environments. This enables that interactive UI elements can be identified, referenced, and reused for command mapping without requiring access to application programming interfaces or internal UI structures, thereby increasing interoperability and robustness in closed or proprietary HMI systems.

Adding the identified candidate actionable UI areas to the interaction database may further comprise comparing the detected candidate actionable UI areas with previously stored UI layouts based on spatial positions and textual or icon content to identify a corresponding stored layout, and reusing metadata associated with the corresponding stored layout for matching user commands. The comparison may be performed based on similarity of spatial positions of the UI areas within the graphics buffer and on similarity of textual content, icon classifications, or other associated metadata. If a correspondence is identified between the current set of detected candidate actionable UI areas and a previously stored UI layout, the system determines that the current application output corresponds to a known screen or view. Upon identification of a corresponding stored layout, metadata previously stored for that screen, including spatial information, extracted text, icon classes, actionability scores, and associated user command mappings, may be reused for matching user commands. By reusing previously stored metadata for the recognized screen, the system reduces the need for repeated full detection and analysis of the same UI layout and improves the reliability and speed of command-to-element matching. This enhances efficiency and robustness in recurring interactions with known screens, as prior knowledge of UI structure is used to accelerate processing and increase matching accuracy.

Performing the UI element analysis may comprise capturing a snapshot of the graphics buffer upon detection of speech input or a wake word and processing the captured snapshot while the user provides the command, the UI element analysis being rate-limited and/or event-triggered. In this embodiment, the UI element analysis may be performed in a resource-aware manner by capturing a snapshot of the graphics buffer upon detection of a speech input or a predefined wake word. Instead of continuously analysing the graphics buffer or processing every graphical update, the system initiates the UI element analysis in response to the detected user input event. The captured snapshot is then processed while the user is providing the command, such that candidate actionable UI areas and their associated metadata are available by the time the speech recognition process produces the corresponding machine-understandable command. By performing the UI element analysis in an event-triggered and/or rate-limited manner, computational load is reduced compared to continuous or periodic processing of the graphics buffer. Processing the snapshot in parallel with the user's speech input reduces overall response latency, since the detection results are ready when the command is available for matching. This improves responsiveness and reduces processing overhead, while maintaining up-to-date detection of UI elements relevant to the user's intended interaction.

In some embodiments, the interaction database may further store spatial relationships between candidate actionable UI elements, such as relative positions (e.g. above, below, left, right) or approximate distance metrics. These spatial relationships may be used to improve robustness of matching in cases where UI layouts change dynamically or where only partial UI content is detected.

In some implementations, if no valid command is detected during the processing of the captured graphics buffer snapshot, the detected UI elements and intermediate results may be discarded without updating the interaction database. This reduces memory usage and avoids storing irrelevant data when the user aborts a command.

In another aspect, the present disclosure provides a method for hands-free user input in a human-machine interface (HMI), the method comprises following steps: receiving a first command from a user via input means; processing the received first command into a corresponding machine understandable text command; transmitting the text command to an Engine of the HMI for analysis; identifying an intended interaction of the user by analysing a context of the text command; identifying one or more actionable user interface areas; matching the identified intended interaction of the user to a corresponding actionable user interface area of the identified one or more user interface areas; generating a simulated input event at the location of the actionable user interface area matched with the identified intended interaction of the user; transmitting the simulated input event to a HMI/UI framework for execution on the HMI display.

The present method according to this aspect enables to provide a unified input method across different user interface frameworks through an input abstraction layer that processes user commands (such as voice input, sign language, or textual input) and maps them to actionable UI elements without requiring framework-specific adaptations. This enables hands-free interaction with different HMI frameworks while ensuring accessibility for users with different input capabilities. It further enables framework-independent input processing, improved accessibility, and seamless interaction across diverse UI environments without requiring modifications to the underlying UI framework or application code.

Receiving a first command from a user via input means enables the system to capture user input, which may be voice commands, sign language, or direct textual input. This is handled by an input processing unit that standardizes input data before further processing. By abstracting the input modality, the system ensures that different input methods can be used interchangeably.

Processing the received first command into a corresponding machine-understandable text command is carried out by the HMI Engine, which processes the input using speech-to-text (STT), gesture recognition, or direct text parsing to convert it into a structured command. This processing ensures that the command can be interpreted independently of the UI framework, allowing for consistent user interactions.

Transmitting the text command to the Engine of the HMI for analysis enables to analyze the context of the text command and determine the intended user interaction. The Engine may be implemented as a software module running on the processing unit of the HMI. Alternatively, the Engine may be also located in a separate hardware unit or in the cloud.

Identifying an intended interaction of the user by analyzing a context of the text command enables to determine the action the user intends to perform. For example, if the user says "Click play," the system understands that the intended action is to activate the play button. Identifying one or more actionable user interface areas enables the system to retrieve actionable UI elements, such as buttons, interactive text fields, or cursor-based UI components, from the interaction database, which maintains a mapping of UI elements previously recognized by pattern recognition or OCR-based detection.

Matching the identified intended interaction of the user to a corresponding actionable user interface area enables the system to correlate the user command with available UI elements to determine the most relevant target. If multiple possible matches exist, the system may highlight UI elements for user confirmation before proceeding.

Generating a simulated input event at the location of the actionable user interface area enables the system to generate a simulated touch, mouse click, or keyboard input event at the corresponding coordinates. This allows for direct interaction with the UI without requiring modifications to the UI framework.

In a preferred implementation, transmitting and executing the simulated input event comprises injecting the simulated input event through an operating-system input injection mechanism, such as a virtual input device, for example, a virtual touch device, at coordinates corresponding to the selected actionable UI area, without invoking application- or framework-specific interfaces. As such this method is independent of the HMI and UI frameworks as those already interface with the OS and therefore do not need to be modified for the solution.

Transmitting the simulated input event to a HMI/UI framework for execution on the HMI display enables the system to execute the interaction as if it were a direct user action. This step enables interaction with any UI framework without requiring dedicated support for alternative input methods. By implementing this method, the system provides a unified, framework-independent way to process user input across different UI environments, enhancing accessibility, maintainability, and scalability without requiring modifications to individual UI frameworks.

The method for hands-free user input in the HMI may further comprise training the engine by identifying an issue regarding matching the identified intended interaction of the user to the corresponding actionable UI area of the identified one or more user interface areas; correcting the identified issue by determining a new input; recording the determined new input with the command and corrected UI interaction to the interaction database to further enhance the future actions.

This additional optional method steps provide a learning mechanism that improves the system's accuracy and adaptability when mapping user input to UI elements. These steps ensure that the HMI Engine continuously refines its ability to match user commands to the correct actionable UI areas, thereby enhancing the system's effectiveness across different UI frameworks, improving interaction accuracy, system adaptability, and robustness when handling ambiguous or uncertain input scenarios.

The issue may be for example a situation, wherein the Engine is not able to choose a single action. Identifying an issue regarding matching the identified intended interaction of the user to the corresponding actionable UI area enables the system to detect cases where it is unable to determine a single correct UI element based on the user's input. This may occur due to multiple similar UI elements (e.g., two "Play" buttons on the screen), dynamic UI changes, or incorrect text recognition. This ensures that the system can dynamically handle situations where a clear match is not found, preventing errors in user interaction.

Correcting the identified issue by determining a new input enables the system to identify an issue and prompts the user to refine their input. For example, by highlighting multiple possible UI elements and asking for confirmation. The user may then provide additional information, such as specifying which button to press or repeating the command with more context. This step allows the system to dynamically resolve ambiguities without requiring framework-specific adaptations. Instead of hardcoding responses for different UI structures, the system learns from real-time interactions.

Recording the determined new input with the command and corrected UI interaction to the interaction database to further enhance future actions enables, once the correct UI element is selected, the system to store this learning experience in the interaction database, associating the corrected input with the identified UI element.

Over time, the system thus is arranged to build a more comprehensive database of interactions, reducing the likelihood of errors in future interactions. This adaptive learning ensures that the system becomes more efficient and accurate the more it is used.

By identifying and correcting incorrect matches, the system ensures that user commands consistently trigger the intended UI actions. The ability to learn and adapt eliminates the need for developers to manually fine-tune the system for each UI framework, allowing for a unified input method across different platforms. By dynamically resolving ambiguous cases, the system ensures smooth and intuitive interactions, even when dealing with complex or changing UI environments. As new UI frameworks or application designs emerge, the system can learn and adjust without requiring modifications, ensuring long-term compatibility. These additional steps thus enable self-improving input mapping across various UI frameworks, ensuring that the system provides a unified, framework-independent input method that remains robust even in dynamic, ambiguous, or evolving UI environments.

Optionally, correcting the identified issue comprises determining possible one or more UI interactions that user has meant; highlighting on the UI the one or more UI elements corresponding to the possible one or more UI interactions; generating the user a request to confirm a selection; receiving from the user the selection confirmation.

By correcting the identified issue this way, it provides an interactive mechanism, that allows the system to handle cases where multiple possible UI interactions match the user's input. This further enhances accuracy, user experience, and adaptability across different UI frameworks by actively engaging the user in refining the interaction.

Determining possible one or more UI interactions that the user has meant enables, when the system detects ambiguity (e.g., multiple buttons labeled "Play" or different interactive elements matching the same command), to identify all reasonable UI elements that could correspond to the user's input. This ensures that the system can operate effectively across different UI layouts and frameworks without requiring predefined mappings for each individual interface.

Highlighting on the UI one or more UI elements corresponding to the one or more possible UI interactions enables the system to visually highlight the UI elements that might be the intended target. This allows the user to visually verify the available options. This step ensures that users can interact accurately with different UI frameworks, even when the UI structure varies between applications or platforms.

Generating a request to the user to confirm a selection enables the system to avoid making an incorrect assumption and to ask the user to confirm which UI element should be selected. This may be done through voice feedback, visual overlays, or touch input. This improves the reliability of hands-free interaction, reducing errors and unnecessary repeated commands, which is particularly useful for accessibility scenarios.

Receiving the user's selection confirmation, when the user confirms the correct UI element, allows the system to execute the desired interaction with higher confidence and accuracy. This final step ensures that the system learns from user feedback and can update its interaction database for future interactions, making it increasingly robust over time.

Correcting the identified issue this way thus provides following technical effects. It increases input accuracy, i.e., it ensures that the correct UI element is selected, preventing misinterpretation of commands. By dynamically resolving ambiguities, the system adapts to different UI structures without requiring predefined rules for each framework. It also provides a guided selection mechanism, which is particularly beneficial for users relying on voice commands or alternative input methods. Instead of processing every possible UI element for a single command, the system efficiently narrows down potential targets and confirms selections only when necessary. These optional steps thus enable precise user interactions across multiple UI frameworks without requiring framework-specific adaptations. By engaging the user in disambiguation, the system ensures accurate, flexible, and scalable input processing, further reinforcing the unified input approach for different human-machine interfaces.

Alternatively, correcting the identified issue may comprise receiving from the user a first command indicating that a selected actionable user interface area is not correct; receiving from the user a second command to cancel the simulated input event and to repeat matching the identified intended interaction of the user to the corresponding actionable user interface area of the identified one or more user interface areas; receiving a second command from the user as the new input.

The alternative steps introduce a user-driven correction mechanism, allowing users to actively adjust interactions when the system selects an incorrect UI element. This enhances accuracy, adaptability, and user satisfaction by enabling error correction in a framework-independent manner. It ensures that users can refine their inputs without requiring modifications to the underlying UI framework, thereby reinforcing the system's unified approach to input processing across different UI environments.

Receiving from the user a first command indicating that a selected actionable user interface area is not correct ensures that input handling remains flexible, even in cases where UI elements are dynamically changing or where multiple similar UI elements exist across different frameworks. This is particularly important, when the system executes an incorrect action (e.g., selecting the wrong button due to a similar UI layout), the user can provide direct feedback indicating that the system's choice was incorrect. Unlike traditional UI automation that assumes static UI structures, this method allows for real-time correction, making the system more adaptable across various HMI frameworks.

The step of receiving from the user a second command to cancel the simulated input event and to repeat matching the identified intended interaction of the user to the corresponding actionable user interface area of the identified one or more user interface areas enables the system to cancel the previously executed action and reattempts the interaction selection without requiring a new framework-specific adaptation. Instead of failing or requiring manual intervention, the system automatically re-evaluates the UI based on the user's intended command. This step enables self-correcting input handling, ensuring that the user can refine their interaction without needing manual UI modifications or application changes.

The step of receiving a second command from the user as the new input enables the system to allow the user to restate or refine the command, ensuring that the intended UI element is correctly identified. This improves interaction reliability, particularly in complex UIs where similar elements (e.g., multiple "OK" buttons) exist within the same framework. Over time, the system can store these refinements in the interaction database, continuously improving its ability to accurately match inputs across different UI environments.

These steps thus enable the users to correct misinterpretations without needing application-level modification; support multiple UI frameworks without custom adaptations, i.e., since error handling occurs at the input processing layer, no changes are needed in individual UI frameworks; improves user experience and accessibility, i.e., users can refine interactions without requiring direct UI interaction, making the system more accessible to voice-based or hands-free users; enables self-correcting interactions, i.e., unlike static automation systems, this allows for user feedback and iterative improvement, ensuring higher accuracy over time. These steps thus provide a flexible, adaptive correction mechanism that ensures input accuracy without requiring modifications to different UI frameworks. By allowing users to refine interactions on demand, the system maintains a unified, framework-independent approach to input handling, making it highly scalable, accessible, and robust across diverse human-machine interfaces.

More specifically, the method for hands-free user input in a human-machine interface (HMI) may comprises following steps: receiving a first command from a user via input means; processing the received first command into a corresponding machine-understandable text command; transmitting the text command to an engine of the HMI for analysis; identifying an intended interaction of the user by analysing a context of the text command; identifying one or more actionable UI areas; matching the identified intended interaction of the user to a corresponding actionable user interface area of the identified one or more user interface areas; generating a simulated input event at the location of the actionable user interface area matched with the identified intended interaction of the user; and injecting the simulated input event via an operating-system input mechanism such that the simulated input event is delivered to the HMI/UI framework for execution on the HMI display.

In this embodiment, a hands-free user input method is implemented in which a first command is received from a user via input means and processed into a corresponding machine-understandable text command. The input means may comprise a voice input as a voice command captured by a microphone, a sign language or gesture input captured by a suitable sensor system, or a textual input provided through an auxiliary interface. In cases where the input is not originally textual, such as voice or sign language, the input is converted into a machine-understandable text representation so that it can be analysed in a uniform manner. The resulting text command is transmitted to an engine of the HMI for analysis, where an intended interaction of the user is identified by analysing the context of the text command.

Based on the identified intended interaction, one or more actionable UI areas are identified, and the intended interaction is matched to a corresponding actionable UI area. A simulated input event is then generated at the location of the matched actionable UI area and injected via an operating-system input mechanism, such as a virtual input device, such that the simulated input event is delivered to the HMI or UI framework for execution on the HMI display. By converting various forms of user input into a common textual representation and injecting simulated input events at the operating-system level, the method enables hands-free interaction with the HMI without requiring modification of the underlying application. This enables the diverse user input modalities to be translated into reliable UI interactions in a framework-independent manner, allowing seamless control of applications through alternative input methods.

Identifying the one or more actionable UI areas may comprise analysing pixel data of the graphics buffer using an image-processing pipeline including a convolutional neural network and optionally icon classification and optical character recognition. The convolutional neural network may be configured to detect visual patterns corresponding to interactive UI elements within the rendered pixel output. Optionally, the analysis may further include icon classification and optical character recognition to extract additional semantic information from graphical symbols and textual regions present in the graphics buffer. The combination of these techniques enables the system to detect and characterise actionable UI areas directly from rendered pixel data without relying on internal application structures or framework-specific metadata. By applying a convolutional neural network together with optional icon classification and text recognition to the graphics buffer, the system can robustly identify interactive elements across heterogeneous UI frameworks and visual styles. This improves detection accuracy and semantic understanding of UI elements, which enhances the reliability of matching the user's intended interaction to the correct actionable UI area in a hands-free interaction scenario.

Optionally, matching the identified intended interaction may comprise scoring candidate actionable UI areas and selecting, based on the scoring, between executing a system-level control and generating the simulated input event. The scoring may take into account factors such as similarity between command text and extracted UI text, semantic correspondence of icon classifications, spatial relevance, prior user selections stored in the interaction database, or other contextual indicators. Based on the resulting scores, the engine selects the most appropriate course of action. If the scoring indicates that the intended interaction corresponds to a predefined system-level control, the engine may execute the corresponding system-level function directly. Alternatively, if the highest-scoring candidate actionable UI area corresponds to an element rendered in the graphics buffer, the engine generates and injects the simulated input event at the coordinates of that UI area. This enables the system intelligently differentiate between system-level controls and pixel-level UI interactions, thereby improving accuracy and reducing unintended actions by selecting the most appropriate execution mechanism based on quantified matching confidence.

Optionally, injecting the simulated input event may comprise injecting the simulated input event via a virtual input device provided by the operating system. The virtual input device may emulate a physical input mechanism, such as a touch input device, mouse, or keyboard, at the operating-system level, such that the simulated input event is processed by the system in the same manner as a genuine hardware-generated event. The injection occurs at coordinates corresponding to the selected actionable UI area, allowing the HMI or UI framework to receive and handle the event without requiring modification of the underlying application. By using the virtual input device of the operating system, the system ensures that the simulated interaction is delivered through standard input handling mechanisms rather than through application-specific interfaces or internal APIs. This improves compatibility with closed or proprietary HMIs and enhances robustness, since the interaction mechanism does not depend on access to application source code, framework-specific hooks, or accessibility layers.

Optionally, the method for hands-free user input in a human-machine interface may further comprises training the engine by: identifying, by the engine, an issue regarding matching the identified intended interaction of the user to the corresponding candidate actionable UI area of the identified one or more user interface areas; correcting the identified issue by determining an alternative candidate actionable UI area; recording the determined alternative candidate actionable UI area together with the command and corrected UI interaction as an update to the interaction database. In this embodiment, the engine responsible for interpreting user commands is further configured to refine its behaviour over time. The engine performs the mapping between the machine-understandable text command and the user interface by evaluating detected UI elements obtained from the graphics buffer together with metadata and prior associations stored in the interaction database. Using this information, the engine determines which candidate UI element should be activated in response to the user's intended interaction.

If the selected UI element does not produce the expected effect, for example because subsequent analysis indicates that the user interface state remains unchanged or inconsistent with the intended interaction, the engine recognises this as an incorrect mapping. The engine then selects an alternative candidate UI element that better corresponds to the interpreted intent and executes the corrected interaction. The association between the user command, the corrected UI element, and the resulting interaction is stored in the interaction database so that future matching operations can take this updated knowledge into account. This ensures that the system adaptively improves its command-to-element mapping based on observed outcomes, thereby increasing reliability and reducing repeated selection errors in subsequent interactions.

In some embodiments, the engine may determine that a simulated input event did not produce the intended effect by analysing subsequent graphics buffer captures and determining that the UI state did not change in a manner consistent with the intended interaction. Such absence of change may be interpreted as an indication that the selected UI element was not actionable.

In some embodiments, correcting the identified issue may comprise: determining possible one or more UI interactions corresponding to the intended interaction; highlighting, by rendering an overlay on top of the graphics buffer, the one or more UI elements corresponding to the possible one or more UI interactions without modifying an underlying application; generating to the user a request to confirm a selection; and receiving from the user the selection confirmation. When the engine determines that the initially selected UI element may not correctly correspond to the user's intended interaction, the system identifies a limited set of alternative UI interactions that plausibly match the interpreted intent. These alternatives are derived from the previously detected candidate actionable UI elements and may be selected based on contextual relevance, semantic similarity to the command, or other matching criteria. Rather than executing an alternative immediately, the system presents these possibilities to the user for confirmation.

To enable this confirmation step without interfering with the normal operation of the application, the system renders a temporary overlay on top of the graphics buffer that visually highlights the corresponding UI elements. The overlay is generated independently of the underlying application and does not modify its internal state or code. The user is prompted to confirm one of the highlighted options, and the received confirmation is used to proceed with the corrected interaction. This enables to resolve the ambiguous or uncertain mappings interactively, improving selection accuracy while preserving compatibility with existing applications and UI frameworks.

In some embodiments, the possible UI interactions presented for user confirmation may be selected from candidate actionable UI elements whose matching scores exceed a predefined or dynamically determined threshold. For example, elements having scores within a predefined range relative to the highest score may be included. This allows presentation of a limited set of plausible options without overwhelming the user.

In some embodiments, correcting the identified issue may comprise: receiving user feedback indicating that the selected candidate actionable UI area does not correspond to the intended interaction; receiving additional user input for refining the intended interaction; and re-determining, based on the refined intended interaction, the alternative candidate actionable UI area. In such embodiments, if the interaction selected by the engine is not appropriate, the user may indicate that the chosen UI element does not correspond to the intended action. Such feedback may be provided via voice input, gesture, or another input modality and may occur in situations where the engine has selected an incorrect candidate actionable UI area or where the user determines that the proposed UI element does not reflect the intended action. Upon receiving this feedback, the system receives additional user input that refines or clarifies the intended interaction. Instead of relying on the original command, the refined input is processed and used as the basis for re-determining the target candidate actionable UI area.

Based on the refined intended interaction, the engine re-determines an alternative candidate actionable UI area. This re-determination may involve re-evaluating candidate UI areas using updated semantic interpretation of the refined input, updated scoring, or other decision logic implemented by the engine. By allowing the user to reject an incorrect selection and supply revised input for re-evaluation, the system supports an interactive correction workflow that improves robustness and usability. Mismatches can thus be resolved through iterative refinement of user intent, reducing the likelihood of repeated incorrect activations and enabling more precise alignment between user commands and UI interactions.

In another aspect, the present disclosure provides a method for input-based interaction with user interface (UI) elements of an application output on the human-machine interface (HMI), the method comprises receiving a first command from a user; identifying from an interaction database one or more UI elements corresponding to the received first command; highlighting on the UI of an application output on the HMI a most probable UI element; receiving user's first evaluation input.

This method for input-based interaction with user interface (UI) elements of an application output on the human-machine interface (HMI) provides a unified way for input on different user interface frameworks by introducing a dynamic UI interaction system that identifies, highlights, and confirms UI elements based on user input, without requiring modifications to individual UI frameworks. This allows for framework-independent input processing, ensuring that users can interact with different HMIs in a consistent and adaptable manner. The improves accuracy in UI element selection, reduces dependency on UI framework-specific implementations, and enhances accessibility for alternative input methods.

Receiving a first command from a user enables the system to capture a user input command, which may be provided via voice, gesture, or text-based input. This command represents the user's intended interaction with the UI. This step ensures that different input modalities can be used without requiring modifications to the underlying UI framework, making the system adaptable to various human-machine interfaces.

Identifying from an interaction database one or more UI elements corresponding to the received first command enables the system to search an interaction database that stores previously recognized UI elements, such as buttons, text fields, or interactive areas, and attempts to match the user command to one or more relevant elements. This step ensures that the system can operate independently of the UI framework, as it retrieves UI information from a pre-existing interaction database rather than directly integrating with application source code.

Highlighting on the UI of an application output on the HMI a most probable UI element enables the system to visually indicates the most probable UI element that matches the user's command, allowing the user to verify the selection. This step increases input accuracy by reducing ambiguity, enabling users to confirm interactions before execution. It also provides a standardized interaction layer that works across different UI frameworks without requiring framework-specific adaptations.

Receiving the user's first evaluation input, when the user provides feedback on the highlighted element by either accepting it (confirming that it is the correct UI element) or rejecting it (indicating that the system should search for another match), enables a dynamic correction mechanism, ensuring that user input remains flexible and adaptive across different UI frameworks. By allowing iterative confirmation, the system ensures that UI interactions remain accurate, even in varying or dynamically changing UI layouts.

By integrating a database-driven UI recognition system with dynamic user validation, this method provides a unified approach to interacting with UI elements across multiple frameworks. The framework-independent nature of the interaction database eliminates the need for custom UI modifications, making the system highly scalable, adaptable, and accessible for hands-free and multimodal input environments.

The method for input-based interaction with UI elements of an application output on the HMI may further comprise receiving user's rejection of the most probable UI element as the user's first evaluation input; labelling all the UI elements with identifiers and showing an overlay on top of the existing UI; receiving user's second evaluation input.

This provides an enhanced UI selection mechanism that allows users to refine their interaction when the system's initial selection is incorrect. By labelling UI elements and displaying an overlay for user confirmation, the system ensures greater accuracy and adaptability across different UI frameworks without requiring access to or modifications of the UI source code. This improves user interaction reliability, enhances accessibility, and a framework-independent approach to UI element selection, making the system more robust for hands-free and multimodal input methods.

If the system selects an incorrect UI element, the user can reject it via voice input, gesture, or other alternative input methods, thus the step of receiving user's rejection of the most probable UI element as the user's first evaluation input ensures that the system remains adaptive to different UI frameworks, allowing dynamic correction without requiring modifications to the underlying application or UI structure.

The step of labelling all the UI elements with identifiers and showing an overlay on top of the existing UI enables the system to respond to the rejection by displaying an overlay layer that marks all UI elements with identifiers, such as numbers, colors, or other visual markers. This overlay is rendered on a higher graphical layer, meaning that the system does not need to modify or integrate into the UI source code to label UI elements. This contributes to solving the framework-independent input challenge by ensuring that UI elements can be selected without requiring direct modifications to the application's UI framework.

Receiving user's second evaluation input, when the user selects the correct UI element using speech, gesture, or another alternative input method enables the system to register this input and execute the correct interaction. This eliminates ambiguity in UI selection, improving user confidence and ensuring high accuracy across different UI layouts and frameworks. Additionally, the system can store the corrected interaction in the interaction database, allowing it to refine future selections based on past user feedback.

By allowing iterative selection, the system minimizes incorrect interactions and ensures users can select the right UI element reliably. By labelling UI elements via an overlay on the graphical buffer, the system functions without modifying application source code, making it compatible with binary-only applications and proprietary UI frameworks.

These steps also support a unified input approach across different UI frameworks, i.e., the users can interact with any UI, regardless of its framework, as the system dynamically detects and labels actionable elements without predefined framework-specific rules. This embodiment further enhances accessibility and hands-free interaction, i.e., the ability to confirm selections via voice, gesture, or alternative input methods improves accessibility for users who cannot use traditional input devices.

The system thus can learn from user corrections, improving selection accuracy over time without requiring manual updates for different UI frameworks. These additional steps provide a robust and flexible UI interaction mechanism that allows for framework-independent input selection, making the system more adaptive, accessible, and scalable across different human-machine interfaces. By enabling user-driven corrections and overlays for UI selection, the system ensures a highly accurate, dynamic, and maintainable solution for unified input processing across various UI frameworks.

According to another aspect, the method for input-based interaction with user interface (UI) elements of an application output on the human-machine interface (HMI) may more specifically comprise: receiving a first command from a user; identifying from at least one UI element source one or more candidate actionable UI elements corresponding to the received first command; highlighting, by rendering an overlay on top of the graphics buffer of the HMI, a most probable candidate actionable UI element; receiving a first evaluation input from the user comprising an acceptance or a rejection of the highlighted candidate actionable UI element; and upon receiving an acceptance, executing the interaction by injecting a simulated input event via a virtual input device of the operating system at coordinates corresponding to the highlighted candidate actionable UI element. In this embodiment, an input-based interaction method is implemented in which a user provides a command that is interpreted to determine one or more candidate actionable UI elements corresponding to that command. The candidate actionable UI elements may be identified from at least one UI element source, which may include rendered pixel data in the graphics buffer, an interaction database storing previously detected UI elements and associated metadata, or a combination thereof. Based on the identified candidates, the system determines a most probable UI element that best corresponds to the received command.

To allow user verification without altering the underlying application, the system renders a temporary overlay on top of the graphics buffer of the HMI that visually highlights the selected candidate actionable UI element. The user then provides an evaluation input indicating acceptance or rejection of the highlighted element. If the user accepts the proposed selection, the system executes the interaction by injecting a simulated input event via a virtual input device of the operating system at coordinates corresponding to the highlighted UI element. This ensures that user intent can be confirmed before execution, improving reliability and preventing unintended actions, while maintaining framework-independent operation through overlay rendering and operating-system-level input injection.

Optionally, the interaction database may be populated from graphics buffer analysis of rendered pixel data using an image-processing pipeline including a convolutional neural network, icon classification or optical character recognition. The data stored in the interaction database is generated through analysis of the rendered output contained in the graphics buffer. Visual processing techniques are applied to the pixel data to detect interactive elements and extract descriptive information associated with them. Such processing may include neural-network-based object detection to locate UI elements within the rendered image, as well as classification of graphical symbols and recognition of textual content to derive semantic attributes. The detected elements and their associated descriptors are then stored in the interaction database for subsequent use during command interpretation. By deriving the database content directly from rendered pixel data rather than from internal application structures, the system maintains a representation of UI elements that is independent of the underlying framework. This enables consistent reuse of previously detected elements when processing new user commands and reduces the need for repeated full analysis of identical or recurring screens.

In the confirmation step, the user confirms the selection of the UI element and the intended action on that element, rather than confirming the resulting application behaviour. This distinction allows the system to validate element selection independently of application-side execution.

Optionally, the method for input-based interaction with user interface (UI) elements of an application output on the human-machine interface may further comprise: receiving the user's rejection of the most probable candidate actionable UI element as the first evaluation input; labelling the detected candidate actionable UI elements with identifiers and rendering an overlay on top of the graphics buffer displaying the identifiers; receiving a second evaluation input from the user selecting one of the labelled candidate actionable UI elements; and storing the selected candidate actionable UI element in the interaction database.

In this embodiment, if the user does not accept the initially proposed UI element, the system enters an interactive disambiguation mode. Instead of executing the previously suggested interaction, the system presents multiple detected candidate UI elements to the user in a structured manner. Each candidate element is visually marked by means of an overlay rendered on top of the graphics buffer, and identifiers are assigned to the displayed elements to allow unambiguous selection. The overlay is generated independently of the underlying application so that the application itself is not modified during this process.

The user may then select one of the labelled elements as the intended target of the interaction. The system processes this second evaluation input and proceeds with execution based on the selected element. Additionally, the association between the command context and the user-selected UI element is stored in the interaction database for future use. This ensures that ambiguous or low-confidence selections can be resolved through explicit user choice, while simultaneously improving future matching accuracy by incorporating user-confirmed selections into the stored interaction data.

In some implementations, graphics buffer analysis is initiated while the user is still providing a voice command, such that detected UI elements are available immediately upon completion of speech recognition.

The system may compare detected candidate actionable UI elements of a current graphics buffer with previously stored UI layouts in the interaction database. The comparison may be based on similarity of spatial positions and similarity of textual or icon content. UI elements located in predefined global regions, such as system status bars, may be excluded from comparison. If a corresponding stored layout is identified, associated metadata may be reused.

Because the method operates on rendered pixel data of the graphics buffer and injects input via operating-system level mechanisms, it can operate with closed or proprietary HMI systems without requiring access to application programming interfaces, software development kits, or source code of the underlying application.

### DETAILED DESCRIPTION OF THE DRAWINGS

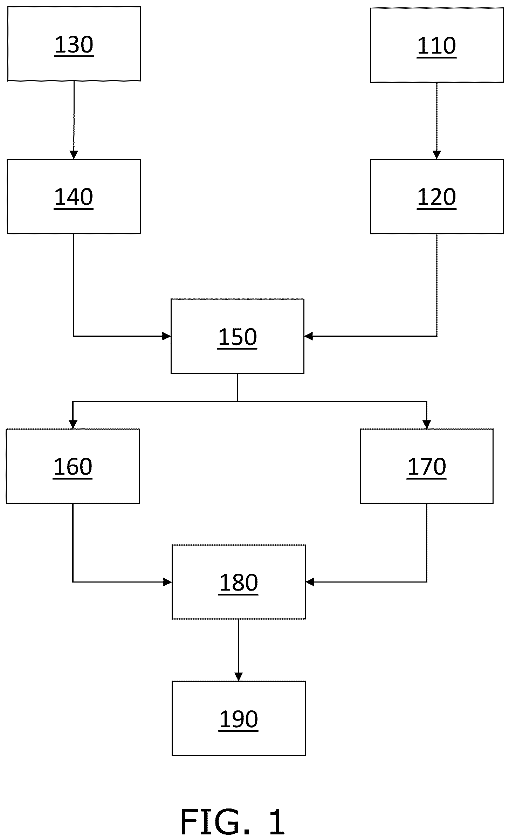

Referring to FIG. 1, there is shown a block scheme illustrating a method for processing user interface interactions on a human-machine interface (HMI) using alternative input methods. The process begins with voice input **110,** which is received as raw voice data and processed by a speech-to-text (STT) engine **120.** The STT engine converts the spoken command into text, which is subsequently forwarded to a search AI logic module **150.** Simultaneously, the graphical output of the user interface is captured from the graphics buffer **130** and analyzed using a convolutional neural network (CNN) **140.** The CNN processes the raw image and extracts UI elements from the graphical buffer, identifying potential interactive components. The extracted UI elements are provided to the search AI logic module **150,** where the system matches the UI components with the received text command to determine the most probable actionable UI area. The search AI logic module processes this information and generates a proposed selection of the intended UI element for the user's confirmation. The proposal is then conveyed to the user through both text-to-speech (TTS) output **160** and a visual display **170.** Following the presentation of the proposed UI element, the system waits for user interaction **180,** which may involve confirming the selection or providing an alternative command. Once the interaction is confirmed, the system generates a corresponding input event and executes the intended action on the HMI. Finally, the system provides action confirmation and feedback **190,** ensuring that the input command has been correctly executed.

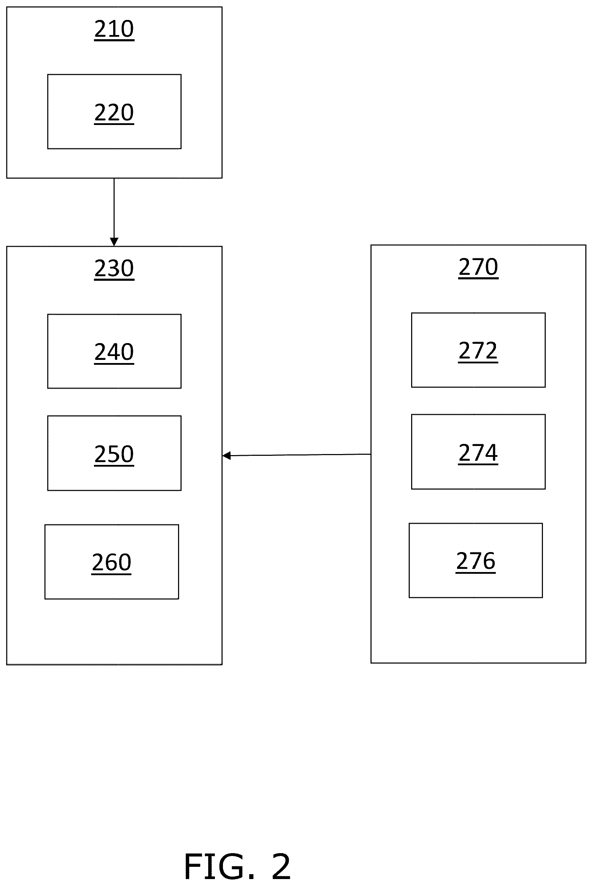

Referring to FIG. 2, there is illustrated an example of a system architecture that enables adaptation of HMI/UI frameworks without requiring modifications to each framework individually. At the core of the system is system environment **210** for managing voice recognition and input interpretation, which includes a voice recognition engine and semantic HMI recognition engine **220.** This engine processes user input, such as voice commands, and interprets them independently of the underlying UI frameworks, ensuring that new input methods can be integrated without modifying individual applications or UI frameworks. The Graphics Buffer and CNN integration **230** serves as the central adaptation layer of the system. Instead of requiring modifications to each UI framework, this module extracts and processes UI elements dynamically from the graphical output. The graphics processing, pattern recognition, optical character recognition (OCR), and audio detection module **240** analyzes UI components, such as buttons and text fields, to determine actionable UI elements without accessing the application source code. The identified UI elements are made available for interaction through the display output **250,** which allows the system to present visual feedback and ensure accurate interaction mapping. Additionally, the extracted UI elements and their associated metadata, including text, object shapes, types, and colors, are stored in an interaction database **260.** This structured storage facilitates dynamic matching of user inputs to UI elements, allowing seamless interaction across multiple UI frameworks. The system is designed to interact with multiple frameworks **270,** such as WebOS **272,** Android **274,** and Linux **276,** without requiring direct modifications to their respective UI implementations. Each framework may comprise one or more applications. By abstracting input handling at the graphical (framebuffer) level, without reliance on accessibility trees or framework-provided UI metadata, and semantic levels, the system ensures compatibility with various UI frameworks while eliminating the need for separate framework-specific adaptations.

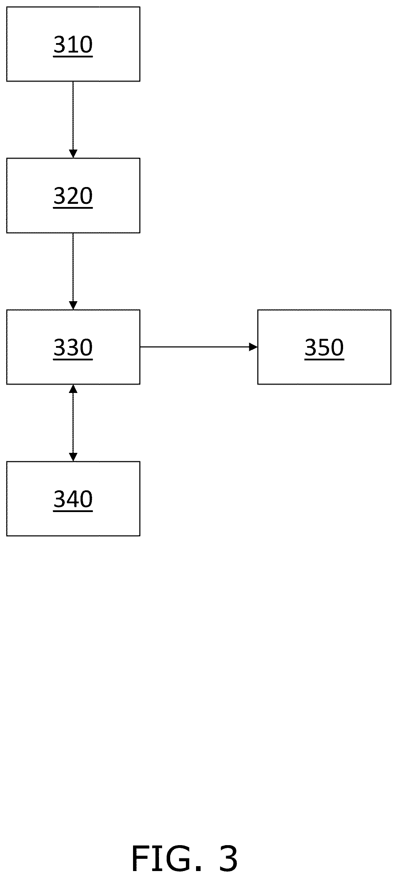

Referring to FIG. 3, the figure illustrates an example of a system architecture for enabling to implement the method for hands-free user input in a human-machine interface (HMI) without requiring modifications to individual UI frameworks. The system processes user input, maps it to actionable UI elements, and generates corresponding interaction events that can be executed within any UI framework. The method begins with user input **310,** where the user issues a command using voice, sign language, or textual input. The input is received by the system and forwarded to the input processing module **320,** which converts the command into a corresponding machine-understandable text representation. For example, the spoken phrase is transformed into the structured command through speech-to-text processing (STT), gesture recognition, or text parsing. The processed command is then transmitted to the Engine **330,** which acts as the central processing unit for interpreting user commands. The Engine **330** interacts with the interaction database **340,** where previously recognized and stored UI elements, and learnings from the previous interactions with the system are maintained. The database contains metadata about actionable UI elements, such as buttons, interactive fields, and text-based controls, allowing the system to map the processed user command to a corresponding UI element. Once the system identifies the correct actionable UI element, the Engine **330** generates a simulated input event **350** at the specific coordinates (x, y) of the UI element. This simulated event mimics a touch, mouse click, or keyboard interaction, ensuring that the system can trigger the desired UI action even if the original UI framework was not designed to support hands-free input. The simulated input event is transmitted to the display and display driver **350,** which executes the action within the HMI/UI framework.

## Claims

1. A method for processing user interface interaction on the human-machine interface (HMI) of a device, the method comprises:
- performing a User Interface (UI) element analysis of an application output in a graphics buffer (130) comprising a rendered pixel output of the human-machine interface;
- identifying, based on the performed UI element analysis, candidate actionable UI areas within the graphics buffer;
- extracting metadata from the graphics buffer and associating the extracted metadata with the respective candidate actionable UI areas;
- adding the identified candidate actionable UI areas together with metadata to an interaction database (340) for matching with user commands; and
- configuring an engine (330) to map user commands, provided via an input method different from an originally intended input method, to one of the candidate actionable UI areas using the interaction database (340).

2. The method according to claim 1, wherein performing the UI element analysis comprises processing the graphics buffer using a convolutional neural network object detector in combination with icon classification and optical character recognition to output bounding boxes, labels and actionability scores for the candidate actionable UI areas.

3. The method according to claim 1 or 2, wherein adding the identified candidate actionable UI areas with metadata to the interaction database comprises storing, for each candidate actionable UI area, one or more of a bounding box; extracted text; icon class; or user-provided text commands related to the respective candidate actionable UI area, the interaction database being framework-agnostic.

4. The method according to any one of the preceding claims, wherein adding the identified candidate actionable UI areas to the interaction database further comprises comparing the detected candidate actionable UI areas with previously stored UI layouts based on spatial positions and textual or icon content to identify a corresponding stored layout, and reusing metadata associated with the corresponding stored layout for matching user commands.

5. The method according to any one of the preceding claims, wherein performing the UI element analysis comprises capturing a snapshot of the graphics buffer upon detection of speech input or a wake word and processing the captured snapshot while the user provides the command, the UI element analysis being rate-limited and/or event-triggered.

6. A method for hands-free user input in a human-machine interface (HMI), the method comprises following steps:
- receiving a first command from a user via input means;
- processing the received first command into a corresponding machine-understandable text command;
- transmitting the text command to an engine (330) of the HMI for analysis;
- identifying an intended interaction of the user by analysing a context of the text command;
- identifying one or more actionable UI areas;
- matching the identified intended interaction of the user to a corresponding actionable user interface area of the identified one or more user interface areas;
- generating a simulated input event at the location of the actionable user interface area matched with the identified intended interaction of the user; and
- injecting the simulated input event via an operating-system input mechanism such that the simulated input event is delivered to the HMI/UI framework for execution on the HMI display.

7. The method according to claim 6, wherein identifying the one or more actionable UI areas comprises analysing pixel data of the graphics buffer using an image-processing pipeline including a convolutional neural network and optionally icon classification and optical character recognition.

8. The method according to claim 6 or 7, wherein matching the identified intended interaction comprises scoring candidate actionable UI areas and selecting, based on the scoring, between executing a system-level control and generating the simulated input event.

9. The method according to claim 6 or 7, wherein injecting the simulated input event comprises injecting the simulated input event via a virtual input device provided by the operating system.

10. The method according to claim 6, wherein the method further comprises training the engine by:
- identifying, by the engine, an issue regarding matching the identified intended interaction of the user to the corresponding candidate actionable UI area of the identified one or more user interface areas;
- correcting the identified issue by determining an alternative candidate actionable UI area;
- recording the determined alternative candidate actionable UI area together with the command and corrected UI interaction as an update to the interaction database.

11. The method according to claim 10, wherein correcting the identified issue comprises:
- determining possible one or more UI interactions corresponding to the intended interaction;
highlighting, by rendering an overlay on top of the graphics buffer, the one or more UI elements corresponding to the possible one or more UI interactions without modifying an underlying application;
- generating to the user a request to confirm a selection; and
- receiving from the user the selection confirmation.

12. The method according to claim 10, wherein correcting the identified issue comprises:
- receiving user feedback indicating that the selected candidate actionable UI area does not correspond to the intended interaction;
- receiving additional user input for refining the intended interaction; and
- re-determining, based on the refined intended interaction, the alternative candidate actionable UI area.

13. A method for input-based interaction with user interface (UI) elements of an application output on the human-machine interface (HMI), the method comprises:
- receiving a first command from a user;
- identifying from at least one UI element source one or more candidate actionable UI elements corresponding to the received first command;
- highlighting, by rendering an overlay on top of the graphics buffer of the HMI, a most probable candidate actionable UI element;
- receiving a first evaluation input from the user comprising an acceptance or a rejection of the highlighted candidate actionable UI element; and
- upon receiving an acceptance, executing the interaction by injecting a simulated input event via a virtual input device of the operating system at coordinates corresponding to the highlighted candidate actionable UI element.

14. The method according to claim 13, wherein the interaction database is populated from graphics buffer analysis of rendered pixel data using an image-processing pipeline including a convolutional neural network, icon classification or optical character recognition.

15. The method according to claim 13, wherein the method further comprises:
- receiving the user's rejection of the most probable candidate actionable UI element as the first evaluation input;
- labelling the detected candidate actionable UI elements with identifiers and rendering an overlay on top of the graphics buffer displaying the identifiers;
- receiving a second evaluation input from the user selecting one of the labelled candidate actionable UI elements; and
- storing the selected candidate actionable UI element in the interaction database.
